## Europäisches Patentamt

## European Patent Office

## Office européen des brevets

(11) Veröffentlichungsnummer: **0 154 808**
A1

(12) # EUROPÄISCHE PATENTANMELDUNG

(21) Anmeldenummer: 85101205.4

(22) Anmeldetag: 06.02.85

(51) Int. Cl.⁴: **B 64 C 11/44**

(30) Priorität: 24.02.84 DE 3406634

(43) Veröffentlichungstag der Anmeldung: 18.09.85
Patentblatt 85/38

(84) Benannte Vertragsstaaten: AT DE FR GB

(71) Anmelder: Grob-Werke GmbH & Co. KG,
Industriestrasse 9, D-8948 Mindelheim (DE)

(72) Erfinder: Mayer, Helmut, Dipl.-Ing., Gartenstrasse 4,
D-8949 Köngetried (DE)
Erfinder: Jungbauer, Rudolf, Bergstrasse 15,
D-8909 Neuburg/Kammel (DE)

(74) Vertreter: Pfister, Helmut, Dipl.-Ing., Buxacher Strasse 9,
D-8940 Memmingen/Bayern (DE)

(54) Vorrichtung zum Verstellen des Anstellwinkels einer Luftschraube.

(57) Der Anstellwinkel der Luftschraubenflügel wird durch einen Verstellmotor (1), ein Getriebe (27) und eine Verstellspindel (21) verstellt. Die Stromversorgung des Verstellmotors (1) erfolgt über einen Generator (2), dessen Läufer (3) mit den stromführenden Leitern mit der Nabe (4) umläuft, während der Ständer (5) dieses Generators mit dem magnetischen Feld an den nicht rotierenden Teilen (6) der Lagerung der Nabe (4) angeordnet ist. Durch Steuerung des magnetischen Feldes des Ständers läßt sich der Generator so steuern, daß die erforderlichen beiden Drehrichtungen des Verstellmotors (1) erhalten werden.

Patentanwalt

Dipl.-Ing. **HELMUT PFISTER**

Postscheckkonto München Nr. 1343 39-805
Bankkonto: Bayerische Vereinsbank Memmingen

Buxacher Straße 9
D-8940 MEMMINGEN/BAYERN
Telefon (08331) 651 83
Telex 054 931 patpfm d

0154808

21/3

**- 5. FEB 1985**

Firma Grob-Werke GmbH & Co. KG,
Industriestraße 9, 8948 Mindelheim

-----

"Vorrichtung zum Verstellen des
Anstellwinkels einer Luftschraube"

-----

Die Erfindung betrifft eine Vorrichtung zum Verstellen des
Anstellwinkels einer Luftschraube, wobei ein in der Nabe
angeordneter Verstellmotor die drehbar gelagerten Luftschraubenflügel verstellt.

Es ist bekannt, die Luftschraubenflügel in der Nabe
drehbar zu lagern, und mittels eines elektrisch angetriebenen Verstellmotors den Anstellwinkel zu verändern,

- 2 -

um auf diese Weise auf unterschiedliche Flugzustände Einfluß nehmen zu können, oder auch um bestimmte Drehzahlen der Luftschraube bzw. des die Luftschraube antreibenden Motors einhalten zu können.

Zur Energieversorgung des Verstellmotors ist es bekannt, Schleifkontaktanordnungen zu verwenden, so daß der Verstellmotor durch die Energieversorgung des Bordnetzes betrieben wird.

Bei einer anderen Bauweise ist der Verstellmotor ersetzt durch einen hydraulisch angetriebenen Kolben, der bei seiner Bewegung gegen eine Rückstellfeder arbeitet, und bei der Verstellung die Luftschraubenflügel verdreht. Die Ölversorgung dieses Kolbens erfolgt beispielsweise durch das Drucköl des die Luftschraube antreibenden Motors.

Den bekannten Vorrichtungen haften verschiedene Nachteile an. Schleifringanordnungen sind wartungsaufwendig und auch störungsanfällig. Dabei wirkt sich auch nachteilig aus, daß die Schleifkontakte von der Drehachse einen verhältnismäßig beträchtlichen Abstand aufweisen. Im allgemeinen müssen auch drei Schleifkontakte vorgesehen werden, da der Verstellmotor in beiden Richtungen drehen soll.

Schleifkontaktanordnungen ergeben auch Funkstörungen.

Bei einem hydraulischen Antrieb der Verstellvorrichtung treten Abdichtungsprobleme und ebenfalls Verschleißprobleme auf, so daß auch dieser Antrieb erheblich

- 3 -

wartungsbedürftig ist.

Es ist Aufgabe der Erfindung, eine Vorrichtung zum Verstellen des Anstellwinkels einer Luftschraube zu schaffen, bei der keine Reibung bzw. kein Schleifen zwischen relativ zueinander beweglichen Teilen auftritt, so daß eine hohe Betriebssicherheit bei geringem Wartungsaufwand erhalten wird.

Zur Lösung dieser Aufgabe geht die Erfindung aus von der Vorrichtung der eingangs beschriebenen Gattung und schlägt vor, daß zur Energieversorgung des Verstellmotors ein Generator vorgesehen ist, dessen Läufer mit den stromführenden Leitern mit der Nabe umläuft, und dessen Ständer mit dem magnetischen Feld an nicht rotierenden Teilen, insbesondere der Lagerung der Nabe angeordnet ist.

Die Erfindung macht sich den Umstand zunutze, daß der Luftspalt zwischen einem Läufer und einem Ständer eines Generators zwar verhältnismäßig klein ist, daß dieser Luftspalt aber ausschließt, daß zwischen dem Läufer und dem Ständer aufeinander reibende Elemente vorgesehen sein müssen. Wenn nun, wie die Erfindung vorsieht, der Ständer mit dem magnetischen Feld mit der Lagerung der Nabe verbunden wird, während der Läufer mit den stromführenden Leitern mit der Nabe umläuft, können jegliche Schleifkontakte bei einem derartigen Generator vermieden werden, da die

- 4 -

stromführenden Leiter des Läufers direkt an den Verstellmotor angeschlossen werden können.

Auf diese Weise wird eine Energieversorgung für den Verstellmotor erhalten, die völlig unabhängig sein kann von der Energieversorgung des Bordnetzes. Aber auch dann, wenn beispielsweise das Magnetfeld des Ständers aus dem Bordnetz gespeist wird, ist doch die Belastung des Bordnetzes sehr gering.

Die Steuerung des Verstellmotors kann in verschiedener Weise erfolgen. Es können dies elektrische Teile oder auch mechanische Teile sein. Besonders günstige Bedingungen werden dann erhalten, wenn, wie nach einem weiteren Merkmal der Erfindung vorgeschlagen wird, die Steuerung des Verstellmotors durch Steuerung des magnetischen Feldes erfolgt. Dabei kann die Steuerung im einfachsten Fall durch einfaches Ein- oder Ausschalten des Verstellmotors vorgenommen werden, wobei der Verstellmotor die Luftschraubenblätter dann sinngemäß zwischen zwei Endstellungen hin und her bewegt. Besser ist es jedoch, wenn, wie die Erfindung ferner vorschlägt, der Läufer zwei wahlweise verwendbare Teile mit gegenläufigen Drehrichtungen des induzierten elektrischen Feldes aufweist. Je nach der gewünschten Drehrichtung des Verstellmotors wird dann durch nichtrotierende Elemente entweder der eine oder andere Teil des Läufers benützt. Es ist klar, daß der Verstellmotor in seiner Bauweise sinngemäß anzupassen ist.

Besonders günstig ist es, wenn zwei Ständerwicklungen vorgesehen sind, die je einem der Läuferteile zugeordnet sind. Auf diese Weise kann von außen die eine oder andere Ständerwicklung beaufschlagt werden, wodurch die eine oder andere Drehrichtung des Verstellmotors und auch sinngemäß die eine oder andere Verstellrichtung des Luftschraubenflügels erreicht wird.

Die Erfindung ist nicht nur mit Ständerwicklungen realisierbar. Der Ständer kann auch ein magnetisches Feld besitzen, das durch Permanentmagneten erzeugt wird. Bei dieser Bauweise sind dann Einrichtungen vorzusehen, bei denen das magnetische Feld des Ständers, insbesondere in Richtung der Drehachse der Nabe verschiebbar ist. Dadurch kann mit dem magnetischen Feld entweder der eine oder der andere Teile der Ständerwicklung beeinflußt werden.

Es ist klar, daß eine solche Verschiebeeinrichtung zu einer Bauweise führt, die völlig unabhängig ist vom Bordnetz. Mit einem einfachen Gestänge kann die Luftschraube verstellt werden. Eine derartige Bauweise ist insbesondere für Kleinflugzeuge von Bedeutung.

Schließlich schlägt die Erfindung vor, daß der Läufer mit dem Luftschraubenflügel gekoppelt ist, derart, daß der Verstellung des Anstellwinkels eine Verschiebung in Richtung der Drehachse entspricht. Auf diese Weise läßt sich ein geschlossener Regelkreis erreichen. Durch mechanische oder elektrische Verstellung des magnetischen Feldes ergibt sich beim Drehen der Luftschraube eine Energieversorgung des Verstellmotors, und diese Verstellbewegung wird so lange fortgesetzt, bis die Verschiebung des Läufers die Energieversorgung wieder unterbricht.

In der Regel ist die Erfindung dann anwendbar, wenn sich die Luftschraube mit ausreichender Drehzahl dreht. Für besondere Fälle kann es jedoch vorteilhaft sein, eine Anordnung zu treffen, die auch eine Verstellung der Luftschraube im Stillstand ergibt. Dies läßt sich bei der Erfindung dadurch erreichen, daß beispielsweise mittels eines Drehfeldgenerators ein sich drehendes Feld in der Ständerwicklung erzeugt wird.

In der Zeichnung sind einige Ausführungsbeispiele der Erfindung schematisch dargestellt. Es zeigen:

Fig. 1                    einen Schnitt durch die Luftschrau-
                          bennabe mit einer erfindungsgemä-
                          ßen Vorrichtung und

Fig. 2 bis
Fig. 5                    Prinzipschaltbilder      verschiedener
                          Ausführungsformen der Erfindung.

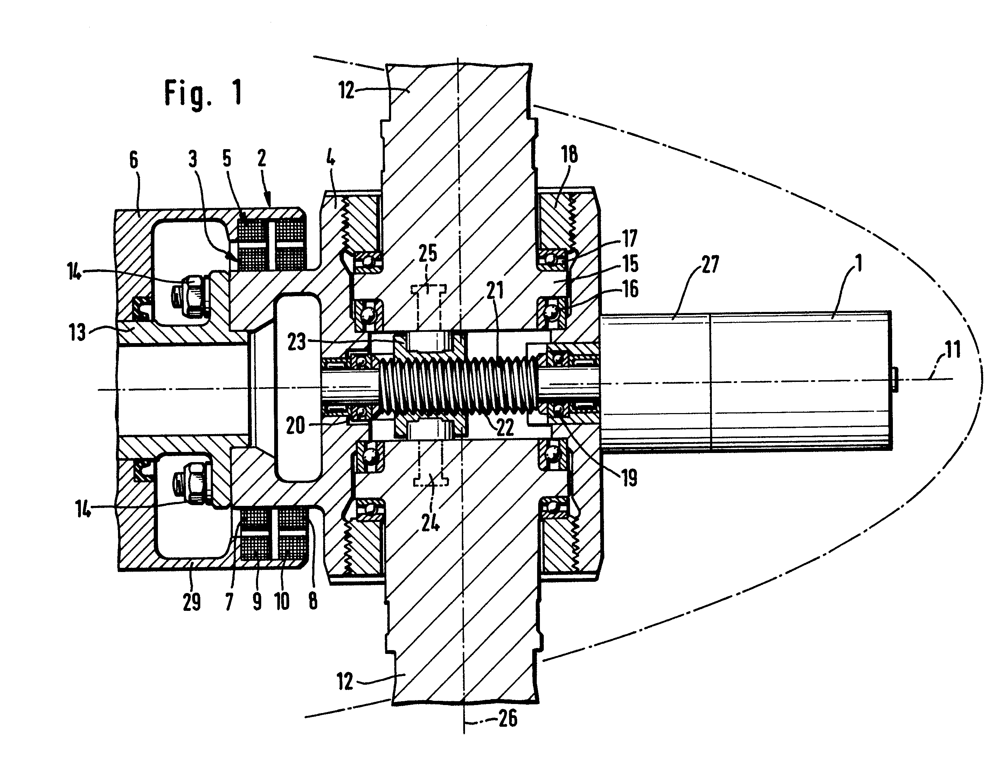

In der Darstellung der Fig. 1 ist die um die Drehachse 11 umlaufende Propellernabe mit 4 bezeichnet. Diese Propellernabe ist auf der umlaufenden rotierenden Welle 13 mittels der Schrauben 14 gehalten und trägt die beiden Luftschraubenflügel 12. Diese Luftschraubenflügel sind am inneren Ende jeweils mit dem Bund 15 an den Lagern 16 und 17 abgestützt. Die zugehörige Ringschraube ist mit 18 bezeichnet. Koaxial zur Drehachse 11 ist in den Lagern 19 und 20 die Verstellspindel 21 gelagert, auf deren Gewinde 22 die Verstellhülse 23 mit einem inneren Gewinde sitzt. In die Verstellhülse greifen in entsprechenden Ausnehmungen Stifte 24 und 25 ein, die jeweils in den inneren Enden der Luftschraubenflügel 12 befestigt sind. Diese Stifte 24 und 25 sind jedoch exzentrisch angeordnet bezüglich der Verdrehachse 26 der Luftschraubenflügel, und zwar oberhalb bzw. unterhalb der Bildebene.

Bei einer Verdrehung der Verstellspindel 21 ergibt sich wegen der Axialverschiebung der Verstellhülse 23 eine sinngemäße Verdrehung, d. h. Verstellung der Luftschraubenflügel mit die jeweilige Achse 26.

Die Verdrehung der Verstellspindel 21 erfolgt über das Getriebe 27 durch den Verstellmotor 1. Je nach der Drehrichtung des Verstellmotors 1 und der Anzahl seiner Drehungen wird sich eine entsprechende Verstellung der Luftschraubenflügel 12 ergeben.

Die Welle 13 ist in nicht näher gezeigten Lagern gelagert, deren Gehäuse mit 6 bezeichnet ist. An einer halsartigen Verlängerung 29 ist der Ständer 5 mit den beiden Teilen 9 und 10 der Ständerwicklung angeordnet. Innerhalb des Ständers ist der Läufer 3 mit den beiden Teilen 7 und 8 angeordnet. Der Läufer 3 und der Ständer 5 bilden zusammen den Generator 2. Der Läufer ist mit nicht näher dargestellten Kabeln mit dem Verstellmotor 1 verbunden. Auch die Stromanschlüsse der Ständerwicklungen in den Teilen 9 und 10 sind nicht näher dargestellt. Diese Stromanschlüsse sind mit Schaltern versehen, die beispielsweise vom Flugzeugführer zu betätigen sind.

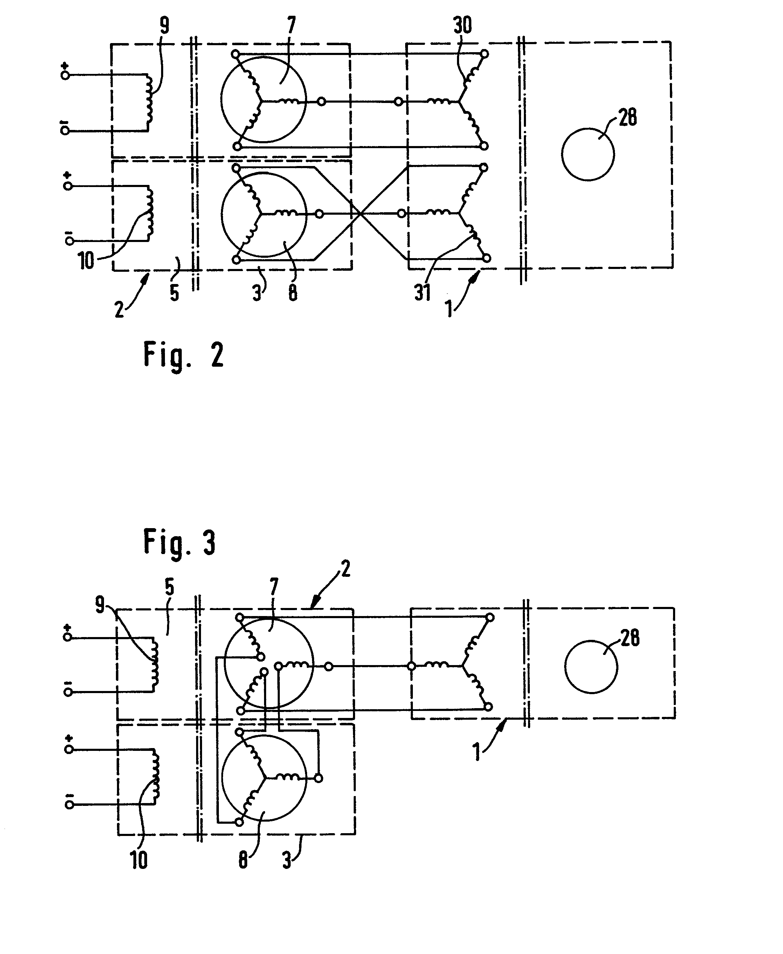

In der Fig. 2 ist das Prinzipschaltbild der Verstellvorrichtung dargestellt. Wenn beispielsweise der Teil 9 der Ständerwicklung erregt wird, wird im Teil 7 des Läufers ein Drehstrom erzeugt, der der Ständerwicklung 30 des Motors 1 zugeleitet wird. Der Läufer 28 des Motors 1 wird beispielsweise eine Rechtsdrehung ausführen, und die Luftschraubenflügel 12 sinngemäß verstellen, solange der Teil 9 der Erregerwicklung des Ständers beaufschlagt wird.

Soll die Verstellung in der anderen Richtung erfolgen, wird anstelle des Teiles 9 Teil 10 der Ständerwicklung erregt, wodurch der Teil 8 des Läufers Strom erzeugt, der zu einem anderen Wicklungsteil 31 des Motors geleitet wird. Durch sinngemäße Verbindungen wird der Motor bei dieser Stromversorgung eine gegenläufige Drehrichtung aufweisen, also beispielsweise nach links drehen, die sich dann sinngemäß über das Getriebe 27 auf die Verstellspindel 21 und damit auf die Luftschraubenflügel überträgt.

In der Fig. 3 ist ein abgewandeltes Prinzipschaltbild dargestellt. Dabei sind die Läuferwicklungsteile 7 und 8 derart miteinander kombiniert, daß im Verstellmotor 1 nur eine einzige Ständerwicklung notwendig wird, um die beiden Drehrichtungen des Verstellmotors zu erhalten.

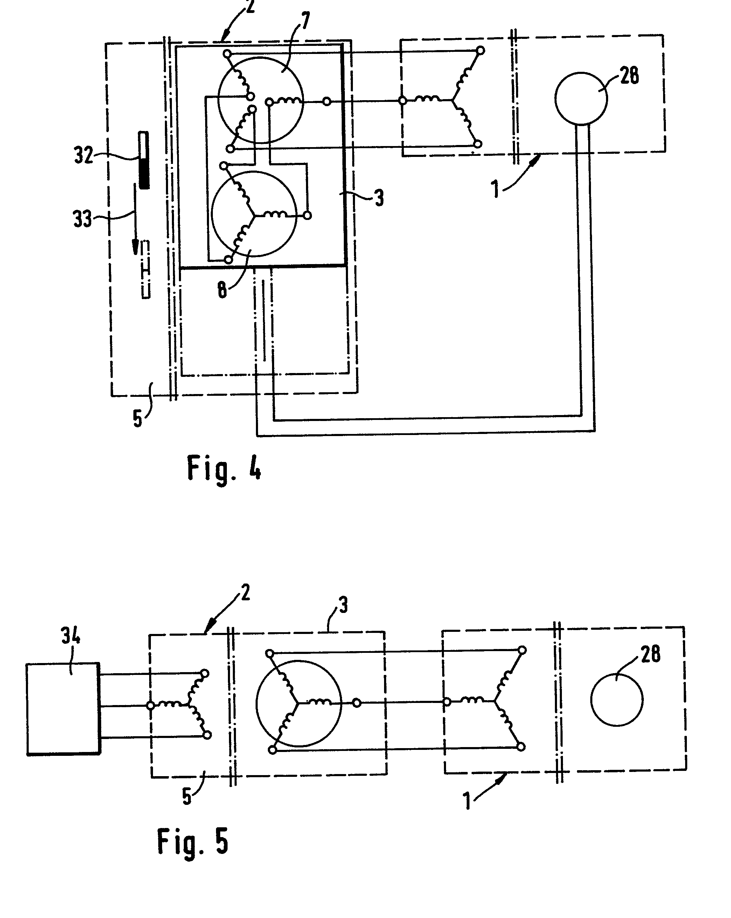

Das Ausführungsbeispiel nach der Fig. 4 zeigt das Prinzipschaltbild einer Verstelleinrichtung, bei der der Ständer 5 von Permanentmagneten gebildet ist. Diese Permanentmagnetordnung 32 kann durch mechanische Mittel im Sinne des Pfeiles 33 parallel zur Drehachse 11 bewegt werden, so daß einmal der Läuferteil 7 und einmal der Läuferteil 8 erregt wird. Der Läufer besitzt dabei grundsätzlich die gleiche Ausbildung wie im Prinzipschaltbild der Fig. 3.

Fig. 4 zeigt zusätzlich noch, wie der gesamte Läufer 3 insgesamt in Richtung der Verstellbewegung des Ständers, also in Richtung der Drehachse 11 verstellbar ist, und zwar erfolgt diese Verstellung durch den Verstellmotor 1. Dadurch wird der Läufer der jeweiligen Stellung des Ständers nachgeführt, bis die Permanentmagnetanordnung 32 wieder eine Mittelläge zwischen den beiden Läuferteilen 7 und 8 einnimmt, und der Motor 1 zum Stillstand kommt.

Im Prinzipschaltbild, das in der Fig. 5 gezeigt ist, ist die Wicklung des Ständers 5 an einen elektronisch arbeitenden Drehfeldgenerator 34 angeschlossen, so daß im Ständer 5 ein sich in der einen oder anderen Richtung drehendes Magnetfeld erhalten wird, das auf die entsprechende Wicklung des Läufers 3 einwirkt, und dadurch einen Drehstrom erzeugt, der in der einen oder anderen Richtung dreht, wobei diese Drehrichtung dann auch der Drehrichtung des Verstellmotors 1 entspricht. Diese Bauweise hat den Vorteil eines einfachen Läufers für den Generator 2 und auch eines einfachen Verstellmotors, und weiter den Vorteil, daß gegebenenfalls auch bei

- 10 -

stehendem Flugzeugmotor eine Verstellung der Luftschraubenflügel möglich wird.

**Patentanwalt**

**Dipl.-Ing. HELMUT PFISTER**

Postscheckkonto München Nr. 1343 39-805
Bankkonto: Bayerische Vereinsbank Memmingen

Buxacher Straße 9
D-8940 MEMMINGEN / BAYERN
Telefon (0 83 31) 6 51 83
Telex 05 4931 patpfm d

0154808

21/3

· 5 FEB 1985

## Patentansprüche:

1. Vorrichtung zum Verstellen des Anstellwinkels einer Luftschraube, wobei ein in der Nabe angeordneter Verstellmotor die drehbar gelagerten Luftschraubenflügel verstellt, dadurch gekennzeichnet, daß zur Energieversorgung des Verstellmotors (1) ein Generator (2) vorgesehen ist, dessen Läufer (3) mit den stromführenden Leitern mit der Nabe (4) umläuft, und dessen Ständer (5) mit dem magnetischen Feld an nicht rotierenden Teilen (6), insbesondere der Lagerung der Nabe (4) angeordnet ist.

- 2 -

2. Vorrichtung nach Anspruch 1, dadurch gekennzeichnet, daß die Steuerung des Verstellmotors (1) durch Steuerung des magnetischen Feldes erfolgt.

3. Vorrichtung nach einem oder beiden der vorhergehenden Ansprüche, dadurch gekennzeichnet, daß der Läufer (3) zwei wahlweise verwendbare Teile (7,8) mit gegenläufiger Drehrichtung des induzierten elektrischen Feldes aufweist.

4. Vorrichtung nach einem oder mehreren der vorhergehenden Ansprüche, dadurch gekennzeichnet, daß zwei Ständerwicklungen (9,10) vorgesehen sind, die je einem Läuferteil (7,8) zugeordnet sind.

5. Vorrichtung nach einem oder mehreren der vorhergehenden Ansprüche, dadurch gekennzeichnet, daß das magnetische Feld des Ständers (5) in Richtung der Drehachse (11) der Nabe (4) verschiebbar ist.

6. Vorrichtung nach einem oder mehreren der vorhergehenden Ansprüche, dadurch gekennzeichnet, daß der Läufer (3) mit dem Luftschraubenflügel (12) gekoppelt ist, derart, daß der Verstellung des Anstellwinkels eine Verschiebung in Richtung der Drehachse (11) entspricht.

Der Patentanwalt

Fig. 1

Fig. 2

Fig. 3

0154808

Fig. 4

Fig. 5

**Europäisches Patentamt**

**EUROPÄISCHER RECHERCHENBERICHT**

0154808
Nummer der Anmeldung

EP 85 10 1205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 890 641 (EXER) <br> * Seite 1, Zeilen 19-23, 28-38; Seite 2, Zeile 35 - Seite 3, Zeile 17; Figur 1 * | 1-4 | B 64 C 11/44 |
| | --- | | |
| X | DE-C- 712 882 (SIEMENS) <br> * Insgesamt * | 1 | |
| | ----- | | |

**RECHERCHIERTE SACHGEBIETE (Int. Cl.4)**

B 64 C

Der vorliegende Recherchenbericht wurde für alle Patentansprüche erstellt.

| Recherchenort <br> DEN HAAG | Abschlußdatum der Recherche <br> 29-04-1985 | Prüfer <br> ZERI A. |
|---|---|---|